(19) Europäisches Patentamt
European Patent Office
Office européen des brevets

(11) EP 3 702 429 A1

(12) **EUROPEAN PATENT APPLICATION**
published in accordance with Art. 153(4) EPC

(43) Date of publication:
**02.09.2020 Bulletin 2020/36**

(21) Application number: **18870870.5**

(22) Date of filing: **19.06.2018**

(51) Int Cl.:
***C09J 175/06*** *(2006.01)* ***C09J 11/06*** *(2006.01)*

(86) International application number:
**PCT/JP2018/023220**

(87) International publication number:
**WO 2019/082434 (02.05.2019 Gazette 2019/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.10.2017 JP 2017207805**

(71) Applicant: **Horizon Inc.**
**Takashima-shi,**
**Shiga 520-1501 (JP)**

(72) Inventors:
- **KOBAYASHI Kenji**
**Takashima-shi**
**Shiga 520-1501 (JP)**
- **KINOSHITA Norihiko**
**Takashima-shi**
**Shiga 520-1501 (JP)**

(74) Representative: **Heinemann, Monica et al**
**Abitz & Partner**
**Patentanwälte mbB**
**Arabellastraße 17**
**81925 München (DE)**

# (54) THERMALLY REVERSIBLE CROSS-LINKED HOT-MELT ADHESIVE

(57) Provided is a thermally reversible cross-linked hot-melt adhesive which has good handling properties and storage stability, can be repeatedly melted by heating and solidified by cooling, and has high adhesiveness and good pot life. This hot-melt adhesive is obtained by melting and mixing a maleimide compound, having a maleimide group at a plurality of ends thereof, with a mixture of a star-branched-structure polyurethane resin having a furan ring at a plurality of ends thereof and a straight-chain polyurethane resin having a furan ring at both ends thereof. The hot-melt adhesive has, due to a thermally reversible equilibrium reaction, a low viscosity when being melted by heating, and, after being solidified by cooling, forms a high molecular weight body having a three-dimensionally cross-linked structure, and therefore, is a resin having high cohesive force and high adhesiveness. The hot-melt adhesive does not react with moisture in the air and therefore can be stored in air, and is particularly suitable as a hot-melt adhesive for bookbinding.

EP 3 702 429 A1

## Description

TECHNICAL FIELD

The present invention relates to a thermally reversible cross-linked hot-melt adhesive, and particularly relates to a thermally reversible cross-linked hot-melt adhesive suitable for bookbinding.

BACKGROUND ART

In general, there are two types of hot melt adhesive used for bookbinding. These characteristics and problems for each hot melt adhesive are as follows.

1) EVA hot melt adhesives

The adhesives are hot melt adhesives containing an ethylene vinyl acetate copolymer resin (EVA) as a base resin. The adhesiveness is obtained by condensing and solidifying the heated and melted adhesive at atmosphere temperature.

The characteristics of this hot melt adhesive include one component type, quick setting, storable in air, repeatedly usable, and long pot life (usable time of the adhesive in an adhesive applying machine) . On the other hand, the problems of this hot melt adhesive include limited adhesive force and heat resistance because only the cohesive force of the resin is contributed in the adhesiveness.

2) Moisture curable polyurethane hot melt adhesive (Polyurethane Reactive Hot Melt Adhesive, hereinafter referred to as "PUR")

The adhesive is a hot melt adhesive containing a urethane prepolymer having an isocyanate group at the terminal which is a solid at room temperature as a major content. The molten adhesive by heating a constant temperature (for example, 120°C) is condensed and solidified at room temperature, and then reacted with a moisture in air to form a three dimensional crosslinking structure, which improves the mechanical properties and in turn obtains strong adhesive force. After the three dimensional crosslinking structure is formed, the adhesive does not melt by heating.

The characteristics of this PUR include one component type, quick setting, high adhesive force, and excellent heat resistance. The problems of this hot melt adhesive include requirement of sealing during storage, short pot life, non-reusable PUR after reacting with a moisture, and non-repeatedly reusable. Further, the PUR also has problems that the remaining diisocyanate monomer in a gas form is generated during heating and melting and washing frequencies of the adhesive applying machine is high.

In recent years, as the hot melt adhesive in which the sufficient adhesive force is obtained, is not dependent to moisture because an isocyanate is not included, and can be usable repeatedly, for example, Patent Document 1 reports a thermoreversible hot melt adhesive which is crosslinkable and thermoreversible. Adhesives containing at least one multifunctional diene monomer/prepolymer and at least one multifunctional dienophile monomer/prepolymer are proposed.

However, although the thermoreversible hot melt adhesive described in Patent Document 1 can be heated and cooled repeatedly without providing the adverse effect to the properties of the adhesive, the adhesive has problems that the viscosity is increased over time, and the adhesive has poor pot life.

PRIOR ART DOCUMENT

PATENT DOCUMENT

Patent Document 1: JP patent No. 5,759,987

SUMMARY OF THE INVENTION

PROBLEMS TO BE SOLVED BY THE INVENTION

An object of the present invention is to solve the problems in the conventional art and to provide a hot melt adhesive having the handling properties and the storage stability similar as EVA hot melt adhesive, being capable of heating and melting, cooling and solidifying repeatedly, and having the adhesiveness similar as PUR, better pot life than PUR, and having excellent handling properties.

The following compounds (a) to (c):

(a) a multi-branched polyurethane resin (thermoplastic star-shaped polyurethane resin) having a chemical structure in which a group having three or more branches is presented, a residue of a reaction product between polyester diol or polyether diol and diisocyanate is connected via an ether oxygen group of an urethane group to these three or more branches, and a furan ring having a conjugated diene structure is further connected to the terminal;
(b) a linear polyurethane resin having a chemical structure in which a residue of a reaction product between polyester diol or polyether diol and diisocyanate is connected via an ether oxygen group of an urethane group and furan rings having a conjugated diene structure are connected to the terminals; and
(c) a bismaleimide which is a crosslinking agent having a maleimide group having a dienophile structure,
are melted and mixed and the properties of the resulting products are examined by the inventors.

As a result, it was found that the product obtained by melting and mixing the above compounds (a) to (c) is a hot melt adhesive having the handling properties and the storage stability similar as EVA hot melt adhesive, being capable of heating and melting, cooling and solidifying repeatedly, having the adhesiveness similar as PUR and better pot life than PUR, and having excellent handling properties, and the hot melt adhesive can be used for various applications, which accomplished the present invention.

MEANS FOR SOLVING THE PROBLEMS

The thermally reversible cross-linked hot-melt adhesive of the present invention which can solve the above problems contains a mixture of a polyurethane resin having furan rings at a plurality of terminals; and a maleimide compound having maleimide groups at a plurality of terminals; wherein the mixture of the polyurethane resin is a mixture of a multi-branched polyurethane resin having a star-shaped branched structure represented by the following formula 1 and a linear polyurethane resin represented by the following formula 2;

[Chemical formula 1]

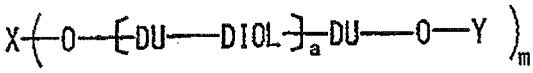

Formula 1

[Chemical formula 2]

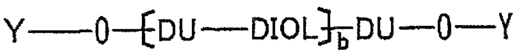

Formula 2

[in the above formula, X- represents a residue of a multi-branched compound having three or more branches having a hydroxy group at the terminal and has a structure in which m hydroxy groups of three or more hydroxy groups are substituted; m represents an integer of 3 or more, a and b are both integer of 1 to 10;

- DU represents a residue of a diurethane compound represented by the following formula 3;

[Chemical formula 3]

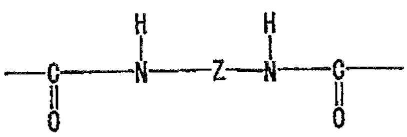

Formula 3

(in the above formula, Z represents a substituted or unsubstituted linear or branched alkylene group, a substituted or unsubstituted cycloalkylene group, a substituted or unsubstituted phenylene group, or a group obtained by connecting the alkylene group, the cycloalkylene group, and the phenylene group);
- DIOL represents a residue of a diol compound having hydroxy groups at both terminals;
- Y represents a residue of a furan derivative represented by the following formula 4;

[Chemical formula 4]

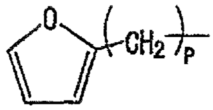

Formula 4

(in the above formula, p is an integer of 1 to 10)]; and wherein as the residue of the diol compound, a residue of a crystalline polyester diol and a residue of a noncrystalline polyester diol or a polyether diol are both contained.

Further, the present invention is characterized in that in the thermally reversible cross-linked hot-melt adhesive having the above features, the -DIOL- is a residue of a diol compound having hydroxy groups at both terminals and represented by the following formula 5;

[Chemical formula 5]

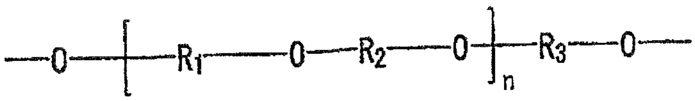

Formula 5

[in the above formula, $R_1$ and $R_3$ independently represent a substituted or unsubstituted linear or branched alkylene group having 2 to 12 carbon atoms, or a substituted or unsubstituted cycloalkylene group, or a group obtained by connecting the alkylene group and the cycloalkylene group; $R_2$ represents a substituted or unsubstituted linear or branched alkylene group having 2 to 12 carbon atoms, or a substituted or unsubstituted cycloalkylene group, a substituted or unsubstituted phenylene group, or a group obtained by connecting the alkylene group, the cycloalkylene group, and the phenylene group; or the following formula 6;

[Chemical formula 6]

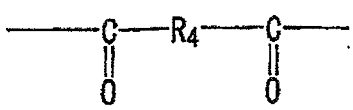

Formula 6

(in the above formula, $R_4$ represents a substituted or unsubstituted linear or branched alkylene group having 2 to 12 carbon atoms, or a substituted or unsubstituted cycloalkylene group, a substituted or unsubstituted phenylene group, or a group obtained by connecting the alkylene group, the cycloalkylene group, and the phenylene group); and n represents an integer of 0 to 70].

Further, the present invention is characterized in that in the thermally reversible cross-linked hot-melt adhesive having the above features, the residue of the diol compound having hydroxy groups at both terminals and represented by the formula 5 contains both:

at least one residue selected from the group consisting of:

a1) a residue of a crystalline polyester diol being composed of sebacic acid and hexanediol and having hydroxy groups at both terminals;
a2) a residue of a crystalline polyester diol being composed of adipic acid and hexanediol and having hydroxy groups at both terminals;
a3) a residue of a crystalline polyester diol being composed of dodecanedioic acid and ethylene glycol and having hydroxy groups at both terminals; and
a4) a residue of a crystalline polyester diol being composed of polycaprolactone and having hydroxy groups at both terminals; and

at least one residue selected from the group consisting of:

b1) a residue of a noncrystalline polyester diol being composed of adipic acid, hexanediol and neopentyl glycol and having hydroxy groups at both terminals;
b2) a residue of a noncrystalline polyester diol being composed of adipic acid and propylene glycol and having hydroxy groups at both terminals;
b3) a residue of a noncrystalline polyester diol being composed of sebacic acid, isophthalic acid, hexanediol, and neopentyl glycol and having hydroxy groups at both terminals;
b4) a residue of a noncrystalline polyester diol being composed of phthalic acid and neopentyl glycol and having hydroxy groups at both terminals;
b5) a residue of a noncrystalline polyester diol being composed of sebacic acid and propylene glycol and having hydroxy groups at both terminals;
b6) a residue of polypropylene glycol; and
b7) a residue of polytetramethylene ether glycol.

Further, the present invention is characterized in that in the thermally reversible cross-linked hot-melt adhesive having the above features, the polyurethane resin further contains a residue of a low molecular weight diol compound selected from the group consisting of 2,4-diethyl-1,5-pentanediol and 1,2-propanediol as -DIOL- in the formula 1 and the formula 2.
Further, the present invention is characterized in that in the thermally reversible cross-linked hot-melt adhesive having the above features, the maleimide compound is a bismaleimide.
Further, the present invention is characterized in that in the thermally reversible cross-linked hot-melt adhesive having the above features, -DU- in the formula 1 and the formula 2 is a residue of a compound selected from the group consisting of 4,4'-diphenylmethane diisocyanate, tolylene diisocyanate, pentamethylene diisocyanate, hexamethylene diisocyanate, and isophorone diisocyanate.

EFFECT OF THE INVENTION

The thermally reversible cross-linked hot-melt adhesive of the present invention is a hot melt adhesive by utilizing the thermoreversible equivalent reaction to the control of the crosslinking. The adhesive has handling properties similar as EVA hot melt adhesive, can adjust to a suitable melt viscosity, and thereby high adhesive force is obtained without impairing the coating properties. Since the hot melt adhesive does not contain an isocyanate, the adhesive does not react with a moisture in air (water), can be stored in air, can be used by performing heating and melting and cooling and solidifying repeatedly, and has good pot life. In addition, by removing the adhered product and re-melting to perform a crosslinking reaction, the strong adhesion can be easily restored.
The thermally reversible cross-linked hot-melt adhesive of the present invention is particularly useful for hot melt adhesive for bookbinding having good pot life, and has improved open-up properties, rapid applying competence and bookbinding strength.

BRIEF DESCRIPTION OF THE DRAWINGS

Fig.1(a) is a photograph showing a breaking state of a test sample after the first test. Fig.1(b) is a photograph showing a breaking state of a test sample after the second test.

MODE FOR CARRYING OUT THE INVENTION

Hereinafter, although the hot melt adhesive for bookbinding will be described as an example, the thermally reversible cross-linked hot-melt adhesive of the present invention is not limited for bookbinding.
The thermally reversible cross-linked hot-melt adhesive of the present invention is a composition containing a multi-branched polyurethane resin having furan rings at a plurality of terminals represented by the formula 1 (polyurethane resin having a star-shaped branched structure), a linear polyurethane resin having furan rings at a plurality of terminals represented by the formula 2, and a maleimide compound having maleimide groups at a plurality of terminals; X- in the formula 1 represents a residue of a multi-branched compound having three or more branches having a hydroxy group at the terminal and has a structure in which m hydroxy groups of three or more hydroxy groups are substituted.
m represents an integer of 3 or more, a and b both represent integer of 1 to 10. Preferably, a represents an integer of 1 to 5, particularly preferably an integer of 1 to 3. Preferably, b represents an integer of 1 to 8, particularly preferably an integer of 2 to 7.
In the present invention, specific examples of the multi-branched compound (multifunctional alcohol) having three or more branches having a hydroxy group at the terminal include trimethylolpropane and pentaerythritol.
In the present invention, since X- in the formula 1 has a chemical structure having three or more branches, the

furan ring having the conjugated diene structure positioned at the terminal of the branch -O-[DU-DIOL]$_a$-DU-O-Y connecting to X- can react with the maleimide group of the dienophile structure of the bismaleimide to form a polymer having a three dimensional crosslinking structure. By mixing the multi-branched polyurethane resin of the formula 1 and the linear polyurethane resin of the formula 2, mechanical properties such as hardness (hard properties) of the resin can be suitably selected. In thermally reversible cross-linked hot-melt adhesive of the present invention, furan rings having the conjugated diene structure positioned at both terminals of the linear polyurethane resin represented by the formula 2 also react with the maleimide group of the dienophile structure of bismaleimide to form a crosslinking structure.

Further, -DU- in the formula 1 and the formula 2 represents a residue of a diurethane compound represented by the formula 3. In this case, Z in the formula 3 is preferably a substituted or unsubstituted linear or branched alkylene group, a substituted or unsubstituted cycloalkylene group, a substituted or unsubstituted phenylene group, or a group obtained by connecting them.

Specific examples of the diisocyanate compound for forming the residue of the diurethane compound having a chemical structure represented by the formula 3 include 4,4'-diphenylmethane diisocyanate (MDI), tolylene diisocyanate (TDI), pentamethylene diisocyanate (PDI), hexamethylene diisocyanate (HMDI), and isophorone diisocyanate (IPDI). 4,4'-MDI and HMDI are particularly preferred.

Further, -DIOL- in the formula 1 and the formula 2 represent a residue of a diol compound having hydroxy groups at both terminals, and preferably, a residue of a diol compound having a polyester or polyether in which n in the formula represented by the formula 5 is from 1 to 70 (preferably from 4 to 50) and having hydroxy groups at both terminals; $R_1$ and $R_3$ in the formula 5 independently represent a substituted or unsubstituted linear or branched alkylene group having 2 to 12 carbon atoms, or a substituted or unsubstituted cycloalkylene group, or a group obtained by connecting them; $R_2$ is a substituted or unsubstituted linear or branched alkylene group having 2 to 12 carbon atoms, or a substituted or unsubstituted cycloalkylene group, a substituted or unsubstituted phenylene group, or a group obtained by connecting them; or a residue having carbonyl groups at both terminals represented by the following formula 6; $R_4$ in the formula 6 is preferably a substituted or unsubstituted linear or branched alkylene group having 2 to 12 carbon atoms, or a substituted or unsubstituted cycloalkylene group, a substituted or unsubstituted phenylene group, or a group obtained by connecting them.

When -DIOL- represented by the formula 5 is the residue of the polyester diol, the polyester diol is a reaction product of one or two types of dicarboxylic acid and the diol. The dicarboxylic acid may be aliphatic dicarboxylic acids or aromatic dicarboxylic acids. Examples of the aliphatic dicarboxylic acids include succinic acid, adipic acid, suberic acid, sebacic acid, decamethylene carboxylic acid, and dodecamethylene dicarboxylic acid. Examples of the aromatic dicarboxylic acids include phthalic acid, isophthalic acid, and terephthalic acid. Examples of diols include ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,2-propanediol, 1,3-butanediol, neopentyl glycol, diethylene glycol, 3-methyl-1,5-pentanediol, and 2,4-diethyl-1,5-pentanediol.

When -DIOL- represented by the formula 5 is the residue of the polyether diol, polyether diols such as polypropylene glycol or polytetramethylene ether glycol can be used. Although it may be crystalline or noncrystalline, noncrystalline polyether diol is preferred.

In the present invention, a small quantity (from 1 to 10 mol% of all -DIOL-) of a low molecular weight diol compound in which n = 0 in -DIOL-represented by the formula 5 may be contained. Examples of the compounds for forming the diol structure in which n = 0 include ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,2-propanediol, 1,3-butanediol, neopentyl glycol, diethylene glycol, 3-methyl-1,5-pentanediol, and 2,4-diethyl-1,5-pentanediol. By selecting the diol structure described above, the cohesive force can be improved.

In the present invention, the multi-branched polyurethane resin preferably contains the residue of the crystalline polyester diol and the residue of the noncrystalline polyester diol or polyether diol as -DIOL- in the formula 1 and the formula 2. In this case, the weight ratio of the crystalline polyester diol to the noncrystalline polyester diol is preferably from 20 : 80 to 70 : 30, more preferably from 30 : 70 to 60 : 40, and particularly preferably from 40 : 60 to 50 : 50.

In the present invention, containing the residue of the crystalline polyester diol and the residue of the noncrystalline polyester diol or polyether diol as -DIOL- in the formula 1 and the formula 2 is for optimizing the coating properties (melt viscosity) and solidification properties (easiness of the solidification immediately after cooling) of the thermally reversible cross-linked hot-melt adhesive.

In the specification, containing the residue of the crystalline polyester diol and the residue of the noncrystalline polyester diol or polyether diol includes a state in which the residue of the crystalline polyester diol as -DIOL- and the residue of the noncrystalline polyester diol or polyether diol as -DIOL- are both included in one compound of the formula 1; and a state in which only the residue of the crystalline polyester diol is included as -DIOL- in one compound of the formula 1 and only the residue of the noncrystalline polyester diol or polyether diol is included as -DIOL- in one compound of the formula 1. For the compound of the formula 2, the same is applied.

Specific examples of the crystalline polyester polyol for forming - DIOL- represented by the formula 5 in the

present invention include sebacic acid/hexanediol reaction products (for example, HS 2H-200S, molecular weight: 2,000 or HS 2H-350S, molecular weight: 3,500, both manufactured by HOKOKU Co., Ltd.), adipic acid/hexanediol reaction products (for example, HS 2H-351A manufactured by HOKOKU Co., Ltd., molecular weight: 3,500), dodecanedioic acid/ethylene glycol reaction products (for example, ETERNACOLL3040 manufactured by UBE INDUSTRIES,LTD., molecular weight: 3,500), and polycaprolactones (for example, PLACCEL 220 manufactured by Daicel Corporation., molecular weight: 2,000).

Further, specific examples of the noncrystalline polyester polyol for forming -DIOL- represented by the formula 5 in the present invention include adipic acid/hexanediol/neopentyl glycol reaction products (for example, HS2F-131A, molecular weight: 1,000 or HS 2F-231AS, molecular weight: 2000, both manufactured by HOKOKU Co., Ltd.), adipic acid/propylene glycol reaction products (for example, ADEKA NEWACE manufactured by ADEKA CORPORATION, molecular weight: 2,000), sebacic acid/isophthalic acid/hexanediol/neopentyl glycol reaction products (for example, HS 2F-305S manufactured by HOKOKU Co., Ltd., molecular weight: 3,100), phthalic acid/ neopentyl glycol reaction products (for example, HS 2F-136P manufactured by HOKOKU Co., Ltd., molecular weight: 1,000), and sebacic acid/propylene glycol reaction products (for example, HS PP-830S manufactured by HOKOKU Co., Ltd., molecular weight: 8,000). Further, specific examples of the polyether polyol include polypropylene glycol (for example, P-400 manufactured by ADEKA CORPORATION, molecular weight: 400 or P-700, molecular weight: 700 or P-2000, molecular weight: 2000), polytetramethylene ether glycol (PTMG650 Mitsubishi Chemical Corporation., molecular weight: 650 or PTMG2000, molecular weight: 2,000).

Preferred polyurethane resin of the present invention contains

a) a residue of a crystalline polyester diol being composed of sebacic acid and hexanediol and having hydroxy groups at both terminals; and
at least one residue selected from the group consisting of:

- b1) a residue of a noncrystalline polyester diol being composed of adipic acid, hexanediol and neopentyl glycol and having hydroxy groups at both terminals;
- b2) a residue of a noncrystalline polyester diol being composed of adipic acid and propylene glycol and having hydroxy groups at both terminals; and
- b3) a residue of a noncrystalline polyester diol being composed of sebacic acid, isophthalic acid, hexanediol, and neopentyl glycol and having hydroxy groups at both terminals.

Further, in the present invention, in order to improve the solidification properties of the hot melt adhesive, the polyurethane resin preferably further contains a residue of a compound selected from the group consisting of 2,4-diethyl-1,5-pentanediol and 1,2-propanediol as -DIOL- in the formula 1 and the formula 2.

The -Y in the formula 1 and the formula 2 is a residue of the furan derivative represented by the formula 2. An example of the furan derivative for forming the residue is furfuryl alcohol.

The m in the formula 1 (the number of a branch (-O-$[DU\text{-}DIOL]_a$-DU-O-Y) binding to a group X) shows an integer of 3 or more. In thermally reversible cross-linked hot-melt adhesive of the present invention, a furan derivative residue positioned at the terminal of the polyurethane resin having a star-shaped branched structure and a maleimide group positioned at the terminal of a maleimide compound are reacted by Diels-Alder reaction to form a high molecular weight polymer having a three dimensional crosslinking structure.

The molar ratio of the multi-branched polyurethane resin to the linear polyurethane resin is preferably within a range of 5:95 to 50:50. More specifically, the molar ratio of the multi-branched polyurethane resin and the linear polyurethane resin is determined based on the reactivity of the diisocyanate determining both molecular weight and molecular weight distribution (corresponding to the melt viscosity of PUR) and the molar ratio of the diisocyanate and the diol compound. Therefore, when MDI having high reactivity was used as the diisocyanate, the molar ratio of the multi-branched polyurethane resin and the linear polyurethane resin is preferably from 10 : 90 to 25 : 75, more preferably from 10 : 90 to 20 : 80, and particularly preferably from 10 : 90 to 15 : 85. In contrast, when HDI having intermediate reactivity was used as the diisocyanate, the molar ratio of the multi-branched polyurethane resin and the linear polyurethane resin is preferably from 5 : 95 to 50 : 50, more preferably from 10 : 90 to 40 : 60, and particularly preferably from 10 : 90 to 35 : 65.

The maleimide compound having maleimide groups at a plurality of terminals contained in the thermally reversible cross-linked hot-melt adhesive of the present invention is preferably bismaleimide. Specific examples include 4,4'-diphenylmethane bismaleimide, bis(3-ethyl-5-methyl-4-maleimidephenyl)methane , N,N'-hexamethylene bismaleimide, 2,2-bis[4-(4-maleimidephenoxy)phenyl]propane, N,N'-1,3-phenylene dimaleimide.

In the present invention, the maleimide compound is preferably added so that the molar equivalent of the maleimide group is greater than that of furan groups connecting to the multi-branched polyurethane resin and the linear polyurethane resin (for example, 1.1 to 1.25-fold excess).

The thermally reversible cross-linked hot-melt adhesive of the present invention may contain an anti-oxidant,

a wax, and an anti-foaming agent in addition to the multi-branched polyurethane resin and the maleimide compound. As a commercially available anti-oxidant, for example, IRGANOX1010, IRGANOX1098, IRGANOX1135 (all manufactured by BASF) can be used. Dibutylhydroxytoluene, butylhydroxyanisole, hydroquinone monomethyl ether, di-p-torylamine, 4,4'-thiobis(6-tert-butyl-o-cresol), and the like can be used. As a crystal nucleating agent, a wax such as paraffin wax, microcrystalline wax, Fischer-Tropsch wax can be used. As an anti-foaming agent, a silicone oil compound type anti-foaming agent is preferred.

Next, the crosslinking and de-crosslinking (thermoreversible equivalent reaction) between the multi-branched polyurethane resin having a furan ring at the terminal and a maleimide group having a dienophile structure in the thermally reversible cross-linked hot-melt adhesive of the present invention will be described with reference to a representative example. However, the chemical structure of each compound is not limited to them.

In the following formula 7, the crosslinking and de-crosslinking reaction between the star-shaped polyurethane resin having a furan ring at the terminal and 4,4'-diphenylmethane bismaleimide in the thermally reversible cross-linked hot-melt adhesive of the present invention is shown.

[Chemical formula 7]

Formula 7

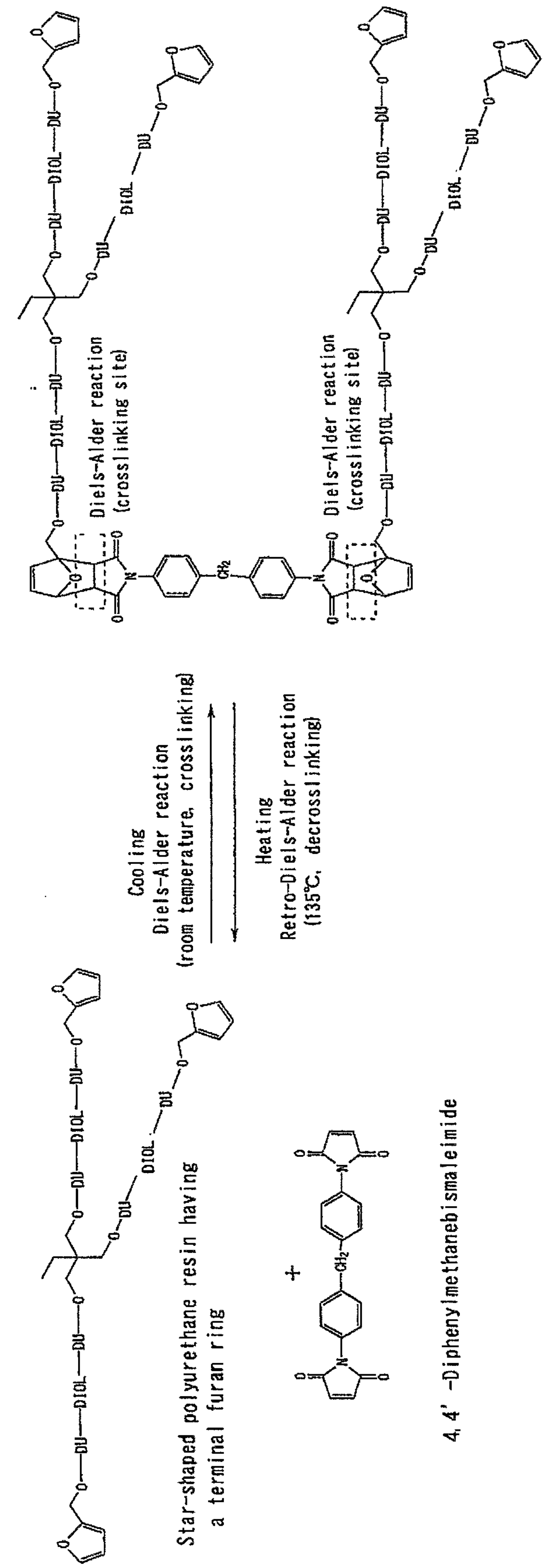


As shown in the formula 7, by Diels-Alder reaction at room temperature, the furan ring of the multi-branched polyurethane resin and the maleimide group of the linear polyurethane resin are connected to form a polymer having

the three dimensional crosslinking structure (in the formula 7, the linear polyurethane resin is not shown) and solidified to form a resin having high cohesive force and high adhesiveness. When the resin is heated, Retro-Diels-Alder reaction is occurred and the crosslinking structure is separated and easily melted, and then the viscosity is decreased.

In the thermally reversible cross-linked hot-melt adhesive of the present invention, the crosslinking and de-crosslinking are occurred as described above, and the reaction between a moisture in air (water) does not occur. Therefore, the hot melt adhesive can be stored in air, and the above "from melting to solidification" and "from solidification to melting" can be repeatedly performed by heating and cooling. Accordingly, by changing the temperature, adhesion (crosslinking) and de-adhesion (de-crosslinking) can be performed reversively.

Hereinafter, the present invention will be described in more detail with reference to Examples and Comparative Examples, however, the present invention is not limited to them.

EXAMPLES

The raw materials which used to prepare hot melt adhesives of Examples 1 to 11 and Comparative Examples 1 to 5 are as follows.

(1) Polyester diol

a) Crystalline polyester polyol

Sebacic acid/hexanediol reaction product (HS 2H-350S manufactured by HOKOKU Co., Ltd., molecular weight: 3,500, abbreviated name: SA/HD3500) Sebacic acid/hexanediol reaction product (HS 2H-200S manufactured by HOKOKU Co., Ltd., molecular weight: 2,000, abbreviated name: SA/HD2000)

b) noncrystalline polyester polyol

Adipic acid/hexanediol/neopentyl glycol reaction product (HS 2F-231AS manufactured by HOKOKU Co., Ltd., molecular weight: 2,000, abbreviated name: AA/HD/NPG2000)
adipic acid/propylene glycol reaction product (ADEKA NEWACE F7-67 manufactured by ADEKA CORPORATION, molecular weight: 2,000, abbreviated name: AA/PG2000)
sebacic acid/isophthalic acid/hexanediol/neopentyl glycol reaction product (HS 2F-305S manufactured by HOKOKU Co., Ltd., molecular weight: 3,100, abbreviated name: SA/IPA/HD/NPG3100)

(2) Low molecular weight diol

1,2-propanediol (manufactured by KANTO CHEMICAL CO., INC.)
2,4-diethyl-1,5-pentanediol (manufactured by Tokyo Chemical Industry Co., Ltd.)

(3) Multi-branched compound

trimethylolpropane (manufactured by KANTO CHEMICAL CO., INC.)

(4) Furan derivative

furfuryl alcohol (manufactured by KANTO CHEMICAL CO., INC.)

(5) Diisocyanate

4,4'-diphenylmethane diisocyanate (manufactured by KANTO CHEMICAL CO., INC.)
hexamethylene diisocyanate (manufactured by Tokyo Chemical Industry Co., Ltd.)

(6) maleimide compound

4,4'-diphenylmethane bismaleimide (manufactured by Tokyo Chemical Industry Co., Ltd.)
N,N'-1,3-phenylene dimaleimide (manufactured by Tokyo Chemical Industry Co., Ltd.)

(7) Additives

Anti-oxidant: hindered phenol based anti-oxidant (IRGANOX 1098 manufactured by BASF)
An anti-foaming agent: a silicone oil compound type anti-foaming agent (KS-66 manufactured by Shin-Etsu Chemical Co., Ltd.)

Example 1: Preparation of hot melt adhesive composition

The polyester diol being composed of sebacic acid and hexanediol and having hydroxy groups at both terminals (SA/HD3500, molecular weight: 3,500), the polyester diol being composed of sebacic acid and hexanediol and having hydroxy groups at both terminals (SA/HD2000, molecular weight: 2,000) and the polyester diol being composed of adipic acid, hexanediol and neopentyl glycol and having hydroxy groups at both terminals (AA/HD/NPG2000, molecular weight: 2,000) were charged to a reaction tank, and melted and mixed at an adding temperature of 90°C.

The anti-oxidant and the anti-foaming agent described in Table 1 were added to the melted and mixed polyester diols. After heating, the raw materials were dewatered by decreasing the pressure to 5 Torr, and stirring at reduced pressure for 3 hours.

The pressure of the reaction tank was returned to atmosphere pressure by $N_2$ gas, and 4,4'-diphenylmethane diisocyanate was added at an atmosphere of $N_2$ gas. After that, the reaction tank was heated to 120°C, and reacted for 3 hours.

After 3 hours, trimethylolpropane and furfuryl alcohol were added, and then reacted for 1 hour. After that, the pressure was decreased to 5 Torr, and stirred at reduced pressure for 1 hour to prepare a multi-branched polyurethane resin of the present invention.

After preparing the multi-branched polyurethane resin, the pressure of the reaction tank was returned to atmosphere pressure by $N_2$ gas. As the maleimide compound, 4,4'-diphenylmethane bismaleimide was added, and heated to 150°C. After heating, the pressure was decreased to 5 Torr, and stirred at reduced pressure for 2 hours.

The pressure of the reaction tank was returned to atmosphere pressure by $N_2$ gas, and the resulting adhesive composition was removed and pelletized.

The detail of the composition of the hot melt adhesive composition according to the present invention (Example 1) obtained as described above is shown in Table 1.

Relationship between the amounts of the products in the hot melt adhesive composition of Example 1 is as described in the following calculation.

In Example 1, when the each raw material was charged in kg, the charge molar number of each raw material is 8.6 moles for SA/HD3500 (molecular weight: 3,500), 5.0 moles for SA/HD2000 (molecular weight: 2,000), 30.0 moles for AA/HD/NPG2000 (molecular weight: 2,000), 3.7 moles for trimethylolpropane (molecular weight: 134.2), 79.5 moles for furfuryl alcohol (molecular weight: 98.1), 83.5 moles for 4,4'-diphenylmethane diisocyanate (molecular weight: 250.3), and 39.6 moles for 4,4'-diphenylmethane bismaleimide (molecular weight: 358.4).

Then, when 4,4'-diphenylmethane diisocyanate was added, since 43.6 moles of the polyester diol and the amount slightly lower than 2-fold amount, 83.5 moles, of 4,4'-diphenylmethane diisocyanate are reacted as the theoretical reaction equation, 39.9 moles of the linear urethane polymer having an isocyanate group at the terminal ((BB-AA-BB)-AA-(BB-AA-BB) and BB-AA-BB) is produced. In the above formula, AA represents a polyester diol, BB represents 4,4'-diphenylmethane diisocyanate.

Theoretical reaction equation:

43.6 AA + 83.5 BB → 83.5/2 BB-AA-BB + (43.6-83.5/2) AA →

(43.6 - 83.5/2) (BB-AA-BB)-AA-(BB-AA-BB) + (83.5/2 - (43.6 - 83.5/2) x 2)

BB-AA-BB

= 1.85 (BB-AA-BB)-AA-(BB-AA-BB) + 38.05 BB-AA-BB

After that, when trimethylolpropane, furfuryl alcohol was added and reacted, 39.9 moles of the linear urethane polymer having an isocyanate group at the terminal and 3.7 moles of the hydroxy group of trimethylolpropane are reacted. Since the molar number of the hydroxy group of trimethylolpropane is 11.1 moles, 11.1 moles of the linear urethane

polymer having an isocyanate group at the terminal is reacted, and then 3.7 moles of the star-shaped urethane polymer having an isocyanate group at the terminal is formed, and 28.8 moles of the linear urethane polymer having an isocyanate group at the terminal is remained.

Although the urethane polymer having these isocyanate groups at the terminal reacts with furfuryl alcohol, the molar number of the isocyanate groups of the urethane polymer having these isocyanate groups at the terminal is a total of 68.7 moles. These react with furfuryl alcohol, however, the added amount of the latter is 79.5 moles, therefore, 10.8 moles of furfuryl alcohol is remained. After the reaction, the excess amount of furfuryl alcohol is removed from the final reaction product by distillation at reduced pressure of 5 Torr or lower.

In Example 1, the urethane resin obtained by mixing 3.7 moles of the produced star-shaped urethane polymer and 28.8 moles of the linear urethane polymer is melted and reacted with 4,4'-diphenylmethane bismaleimide to form a thermally reversible cross-linked hot-melt adhesive. In the adhesive, the obtained resin has branches and three dimensional crosslinking structure. The solidification and adhesion are proceeded at low temperature, and melting and de-adhesion is proceeded at high temperature. In this case, the equivalent amount of 4,4'-diphenylmethane bismaleimide to the furan group of the terminal of the polyurethane is (28.8 + 3.7 x 3/2 = 34.35) moles. The amount greater than the amount, about (28.8 + 3.7 x 3 = 39.9) moles, is added to promote the reaction. In Example 1, the maleimide compound is added so that the molar equivalent of the maleimide group is about 1.16-fold greater than that of furan groups connecting to the multi-branched polyurethane resin and the linear polyurethane resin.

Examples 2 to 11

Adhesive compositions having various formulations were prepared in a manner similar to Example 1. The details of the compositions of Examples 2 to 11 are shown in Table 1.

When the molecular weight distributions were measured by gel permeation chromatography (GPC) for hot melt adhesive compositions of Examples 1 to 11 of the present invention described in the following Table 1, these compositions had a number average molecular weight (Mn) of about 8,000 to 15,000 (weight average molecular weight (Mw) of about 16,000 to 30,000). The average molecular weight of the diol was calculated by the molecular weight and the molar number of the diol blended in each Example. From the measurement results of number average molecular weight described above and the structures of the formula 1 and the formula 2, the values of a and b for all Examples were calculated, and the average values were calculated. In this case, since in Examples 1 to 11, trimethylolpropane was used as the multi-branched compound having three or more branches having a hydroxy group at the terminal, the calculation was performed using m=3.

As a result, for the compound of the formula 1, when the lower limit Mn was 8,000, a was 1.2, and when the upper limit Mn was 15,000, a was 2.2. For the compound of the formula 2, when the lower limit Mn was 8,000, b was 3.5, and when the upper limit Mn was 15,000, b was 6.8.

As described above, the range of a in the formula 1 and the range of b in the formula 2 in the hot melt adhesive composition of the present invention (Examples 1 to 11) was obtained "a is from 1.2 to 2.2" and "b is from 3.5 to 6.8". However, in the actual hot melt adhesive composition, the compound represented by the formula 1 and the compound represented by the formula 2 are mixing, and each compound has each molecular weight distribution. Therefore, the values of a and b of the compound formed actually are both believed to be wider than the values obtained by the above calculation.

[Table 1]

| Contents | Composition | Example 1 | Example 2 | Example 3 | Example 4 | Example 5 | Example 6 | Example 7 | Example 8 | Example 9 | Exam. 10 | Exam. 11 |
|---|---|---|---|---|---|---|---|---|---|---|---|---|
| Polyester diol | SA/HD3500 (parts by weight) | 30 | 30 | 30 | 30 | 25 | 30 | 30 | 50 | 30 | 30 | 50 |
| | SA/HD2000 (parts by weight) | 10 | 20 | 10 | 10 | 20 | 20 | 20 | | 20 | 20 | |
| | AA/HD/NPG2000 (parts by weight) | 60 | 50 | 60 | 60 | 55 | | 30 | 50 | | 50 | 50 |
| | AA/PG2000 (parts by weight) | | | | | | 30 | | | 30 | | |
| | SA/IPA/HD/NPG3100 (parts by weight) | | | | | | 20 | 20 | | 20 | | |
| Diol | 1,2-Propanediol (parts by weight) | | | 1.5 | | | | | 1.5 | 1.5 | | 1.5 |
| | 2,4-Diethyl-1,5-pentanediol (parts by weight) | | | | 1.5 | 1.5 | | | | | 1.5 | |
| Multi-branched compound | Trimethylol propane (parts by weight) | 0.5 | 0.5 | 0.5 | 0.5 | 0.5 | 0.4 | 0.4 | 0.5 | 0.5 | 0.4 | 0.5 |
| Furan derivative | Furfuryl alcohol (parts by weight) | 7.8 | 7.8 | 10.2 | 7.3 | 8.8 | 5.1 | 6.1 | 5.8 | 5.8 | 5.2 | 5.8 |
| Diisocyanate | 4.4'-Diphenylmethane diisocyanate ( patrs by weight) | 20.9 | 21.3 | 28.7 | 22.8 | 24.8 | | | | | | |
| | Hexamethylene diisocyanate (parts by weight) | | | | | | 11.3 | 12.2 | 15.1 | 15.2 | 13.7 | 15.1 |

(continued)

| Contents | Composition | Example 1 | Example 2 | Example 3 | Example 4 | Example 5 | Example 6 | Example 7 | Example 8 | Example 9 | Exam. 10 | Exam. 11 |
|---|---|---|---|---|---|---|---|---|---|---|---|---|
| Maleimide compound | 4,4'-diphenylmethanebismaleimide (parts by weight) | 14.2 | 14.2 | 18.6 | 13.3 | 16.1 | 14.2 | 11.2 | 10.6 | 10.7 | 9.6 | |
| | N,N'-1,3-Phenylenedimaleimide (parts by weight) | | | | | | | | | | | 7.9 |
| Additive | Antioxidant IRGANOX1098 (weight%) | 1 | 1 | 1 | 1 | 1 | 1 | 1 | 1 | 1 | 1 | 1 |
| | Defoamer KS-66 (weight%) | 0.05 | 0.05 | 0.05 | 0.05 | 0.05 | 0.05 | 0.05 | 0.05 | 0.05 | 0.05 | 0.05 |

Comparative Examples 1 and 2

Comparative Examples 1 and 2 was a commercially available EVA hot melt adhesive (HM-225 manufactured by Horizon International Inc.) and a moisture curable polyurethane hot melt adhesive (HMR-115 manufactured by Horizon International Inc.).

Comparative Examples 3 and 4

Adhesive compositions without the maleimide compound were prepared in a method similar to Example 1. The details of the compositions of Comparative Examples 3 and 4 are shown in Table 2.

Comparative Example 5

An adhesive composition without trimethylolpropane was prepared in a method similar to Example 1. The detail of the composition of Comparative Example 5 is shown in Table 2.

[Table 2]

| Contents | Composition | Comp.Ex.3 | Comp.EX.4 | Comp.Ex:5 |
|---|---|---|---|---|
| Polyester diol | SA/HD3500 (parts by weight) | 30 | 50 | 50 |
| | SA/HD2000 (parts by weight) | 20 | | |
| | AA/HD/NPG2000 (parts by weight) | 50 | 50 | 50 |
| | AA/PG2000 (parts by weight) | | | |
| Diol | 1,2-Propanediol (parts by weight) | | 1.5 | 1.5 |
| | 2,4-Diethyl-1,5-pentanediol (parts by weight) | | | |
| Multi-branched compound | Trimethylol propane (parts by weight) | 0.5 | 0.5 | 0 |
| Furan derivative | Furfuryl alcohol (parts by weight) | 7.8 | 5.8 | 5.3 |
| Diisocyanate | 4,4'-Diphenylmethane diisocyanate ( parts by weight) | 21.3 | | |
| | Hexamethylene diisocyanate (parts by weight) | | 15.1 | 13.9 |
| Maleimide compound | 4,4'-diphenylmethanebismaleimide (parts by weight) | | | 9.7 |
| | N,N' -1,3-Phenylenedimaleimide (parts by weight) | | | |
| Additive | Antioxidant (weight%) | 1 | 1 | 1 |
| | Defoamer (weight%) | 0.05 | 0.05 | 0.05 |

The following items were each evaluated for the hot melt adhesives of Examples 1 to 11 and Comparative Examples 1 to 5. Each evaluation method is as follows.

[Evaluation method]

(1) Mechanical properties

Measurements were carried out according to the criteria of JIS K6251 (tensile testing of vulcanized rubber).
The composition was shaped in a sheet form having a thickness of 0.5 mm. After the sheet was left for 1 week or longer, the sheet was punched with a dumbbell mold No. 2 to form a test sample. The test sample for measurement was attached to a full-auto rubber tensile testing machine (AGS-10kNG by Shimadzu corporation), the sample was pulled in a condition of a tensile speed 100 mm/min. The stress and elongation when the test sample ruptured was measured, and then the elastic modulus, the upper yielding stress, the maximum stress, and the fracture strain were

calculated.

(2) Viscosity properties

a) Measurement of melt viscosity

The melt viscosity was measured on a rational viscometer (D-II+ manufactured by Brookfield) at a spindle rotational speed of 10 rpm for the molten sample at a predetermined measurement temperature.

b) Pot life

A rotational viscometer was positioned in a constant low temperature/humidity chamber (HIFLEX FX224P manufactured by Kusumoto Chemicals, Ltd.) conditioned at a room temperature of 25°C and a humidity of 60%. The melt viscosity was measured on the rational viscometer at a spindle rotational speed of 10 rpm for the molten sample at a predetermined measurement temperature, and the value was considered as the melt viscosity at 0 hour. After that, the spindle of the rotational viscometer in the same atmosphere and melting temperature was continued rotating. After 5 hours, the melt viscosity was measured. The rate of change of the melt viscosity is calculated by the melt viscosity after 5 hours, assuming that the melt viscosity at 0 hour is 100%. The lower the rate of change of the melt viscosity is, the better the pot life is.

(3) Thermal properties

Melting point and crystallization point were measured on a differential scanning calorimetry (DSC·60 manufactured by Shimadzu corporation). The measurement was performed by a temperature profile from 25°C, increasing at an increasing speed of 10°C/min to 200°C, and then decreasing at a decreasing speed of -10°C/min to -20°C.

(4) Adhesive properties

a) Tensile shear adhesive strength test

Using an aluminum plate (25 × 100 mm and thickness 1mm) or an acryl plate (25 × 100 mm and thickness 2mm) as a substrate, a test sample for tensile shear adhesive strength test was made according to JIS K6850. The melting temperature of the adhesive when making the test sample was as same as the measurement temperature of the viscosity properties.

After forming the test sample, the sample was left for 1 week or longer. After that, the test sample for measurement was attached to a full-auto rubber tensile testing machine (AGS-10kNG by Shimadzu corporation), the sample was pulled in a condition of a tensile speed 10 mm/min. The maximum load when the test sample ruptured was measured, and then the strength was calculated.

The rupture state of the test sample when the test was performed was recorded. When the substrate and the adhesive were peeled at the interface, it is considered as interface separating. When the cohesive failure of the adhesive was occurred, it was considered as cohesive failure. When the substrate was ruptured, it was considered as substrate failure.

b) Measurement of the bookbinding strength

An A4 size coat paper (duodecimo, the weight of 1R is 73 kg) was used as papers in book, and a full-automatic 4-clamp perfect bookbinding machine (BQ-470 manufactured by Horizon International Inc.) was used to produce a bookbound article having a thickness of 10 mm. The thickness of the adhesive of the bookbound article was about 0.3 mm. For EVA hot melt adhesive (Comparative Example 1), the thickness was about 1.0 mm.

The melting temperature of the adhesive when bookbinding was as same as the measurement temperature of the viscosity properties.

The bookbinding strength of the bookbound article was measured on a page pull tester (TE-4001 manufactured by TESTER SANGYO CO,. LTD.).

The method for measuring the bookbinding strength by a page pull tester includes setting the bookbound article to the page pull tester, winding and fixing a paper for strength measurement to a chuck part, lifting the paper vertically, and measuring a load when the measuring paper is withdrawn from the bookbound article with a pull gauge connected to the chuck part. The bookbinding strength per 1 page was calculated from the result.

The unit of the bookbinding strength is kg/page.

The bookbinding strength was measured for total 3 pages including pages near area of the middle and one fourth from the start page and one fourth from the last page per 1 bookbound article. Total 3 books of the bookbound article was measured per 1 sample, and the average value was considered as the bookbinding strength of the sample.
The measurement of the bookbinding strength was performed at 168 hours after bookbinding.

(5) Storage stability

A lump of the composition having a size of about 5 mm square was left under atmosphere at room temperature for about 1 week. After that, when the composition was heated at the temperature as same as the measurement temperature of the viscosity properties, if a gelled material is not included in the molten composition, it was considered as "storable in air". If a gelled material is included, it was considered as "non-storable in air".
The above evaluation results are summarized in the following Table 3 and Table 4.

[Table 3]

| | | | | Example 1 | Example 2 | Example 3 | Example 4 | Example 5 | Example 6 | Example 7 | Example 8 | Example 9 | Exam. 10 | Exam. 11 |
|---|---|---|---|---|---|---|---|---|---|---|---|---|---|---|
| Mechanical property | Elastic modulus (MPa) | | | 71.8 | 129.4 | 89.8 | 61.8 | 119.1 | 60.3 | 80.4 | 58.1 | 43.0 | 70.9 | 63.7 |
| | Upper yielding stress (MPa) | | | 5.6 | 8.9 | 9.8 | 4.8 | 8.0 | 4.5 | 5.9 | 4.8 | 4.4 | 4.7 | 4.8 |
| | Maximum stress (MPa) | | | 11.7 | 14.2 | 22.2 | 11.6 | 16.0 | 5.8 | 8.2 | 9.9 | 6.6 | 7.3 | 7.3 |
| | Fracture strain (%) | | | 563.6 | 476.2 | 430.5 | 611.4 | 516.6 | 793.3 | 892.9 | 871.0 | 846.0 | 885.6 | 892.8 |
| Viscosity property | Melt viscosity (mPa·sec) | | | 6900 | 6800 | 8200 | 8400 | 6500 | 7700 | 4500 | 6400 | 6400 | 5400 | 5800 |
| | Measured temperature (°C) | | | 135 | 135 | 135 | 135 | 135 | 135 | 135 | 135 | 135 | 135 | 135 |
| | Pot life (%) | | | 108.7 | 117.8 | 120 | 110.7 | 115.6 | 128.7 | 1t9 | 112 | 107.4 | 107.4 | 111.9 |
| Thermal property | Melting point (°C) | | | 58.3 | 58.2 | 59.2 | 57.5 | 57.3 | 64.6 | 63.8 | 64.9 | 63.5 | 61.9 | 64.3 |
| | Crystallization point (°C) | | | 20.1 | 22.5 | 34.1 | 14.4 | 14.9 | 38.7 | 35.1 | 40.1 | 36.9 | 39.3 | 38.6 |
| Adhesive property | Tensile shear adhesion test | Aluminum sheet | Strength ($N/mm^2$) | 0.5 | 0.6 | 0.5 | 0.8 | 1.0 | 0.9 | 0.9 | 0.9 | 0.8 | 0.9 | 0.8 |
| | | | Rupture state | Interface separating | Interface separating | Interface separating | Interface separating | Interface separating | Interface separating | Interface separating | Interface separating | Interface separating | Interface separating | Interface separating |
| | | PMMA sheet | Strength ($N/mm^2$) | 40 | 4.6 | 4.4 | 3.7 | 4.6 | 1.8 | 3.3 | 2.8 | 2.8 | 2.7 | 2.6 |
| | | | Rupture state | Substrate failure | Cohesive failure | Cohesive failure | Substrate failure | Substrate failure | Cohesive failure | Cohesive failure | Cohesive failure | Cohesive failure | Cohesive failure | Cohesive failure |
| | Bookbinding strength (kg/page) | | | 30.3 | 32.1 | 34.4 | 30.9 | 30.9 | 18.6 | 30.6 | 23.5 | 24.1 | 25.1 | 25.1 |
| Storage stability | | | | Storable in air | Storable in air | Storable in air | Storable in air | Storable in air | Storable in air | Storable in air | Storable in air | Storable in air | Storable in air | Storable in air |

[Table 4]

| | | | | Comp.Ex. 1 | Comp.Ex. 2 | Comp.Ex. 3 | Comp.Ex. 4 | Comp.Ex. 5 |
|---|---|---|---|---|---|---|---|---|
| Mechanical property | Elastic modulus (MPa) | | | 34.6 | 107.0 | 25.0 | 34.6 | 37.2 |
| | Upper yielding stress (MPa) | | | 3.1 | 5.9 | 1.9 | 2.4 | 3.6 |
| | Maximum stress (MPa) | | | 3.9 | 16.0 | 1.9 | 2.4 | 3.7 |
| | Fracture strain (%) | | | 797.1 | 869 | 15.1 | 13.5 | 158.9 |
| Viscosity property | Melt viscosity (mPa·sec) | | | 4200 | 5800 | 4400 | 5200 | 6300 |
| | Measured temperature (°C) | | | 180 | 120 | 135 | 135 | 135 |
| | Pot life (%) | | | 99.1 | 198.2 | 95.2 | 100.9 | 111.0 |
| Thermal property | Melting point (°C) | | | 62.5 | 53.7 | 56.4 | 64.8 | 63.9 |
| | Crystallization point (°C) | | | 58.9 | 33.5 | 32.4 | 41.1 | 41.1 |
| Adhesive property | Tensile shear adhesion test | Aluminum sheet | Strength ($N/mm^2$) | 1.5 | 2.3 | 0.4 | 0.4 | 0.6 |
| | | | Rupture state | Cohesive failure | Cohesive failure | Cohesive failure | Cohesive failure | Interface separating |
| | | PMMA sheet | Strength ($N/mm^2$) | 4.1 | 1.5 | 0.3 | 0.5 | 1.0 |
| | | | Rupture state | Substrate failure | Cohesive failure | Cohesive failure | Cohesive failure | Cohesive failure |
| | Bookbinding strength (kg/page) | | | 21.7 | 25.6 | 4.3 | 2.9 | 20.5 |
| Storage method | | | | Storable in air | Non-storable in air | Storable in air | Storable in air | Storable in air |

As seen in the evaluation results in Table 3 and Table 4, all of the thermally reversible cross-linked hot-melt adhesives of the present invention (Examples 1 to 11) have mechanical properties and adhesive properties similar as the PUR hot melt adhesive. Further, the thermally reversible cross-linked hot-melt adhesive of the present invention can be stored in air, similar as the conventional EVA hot melt adhesive (Comparative Example 1). The adhesive of the present invention was confirmed to have better pot life and improved mechanical properties than the PUR hot melt adhesive(Comparative Example 2) shown in Table 4. Further, the thermally reversible cross-linked hot-melt adhesive of the present invention can be heated and melted and cooled and solidified repeatedly.

Since Comparative Examples 3 and 4 does not contain the maleimide compound, the adhesive had lower mechanical properties and adhesive properties than the thermally reversible cross-linked hot-melt adhesive of the present invention.

Further, for Example 8 and Comparative Example 5, the weight-measured sample was immersed in toluene for 24 hours, filtered, dried at 25°C and at a pressure of not more than 5 Torr for 24 hours, and then the weight of the sample was measured. When the ratio of the gelation (the value showing the presence or absence of the three dimensional crosslinking structure) was calculated from the difference between the weight before and after immersing, the ratio of the gelation for Example 8 and Comparative Example 5 was 43.0 wt% and 7.9 wt%, respectively.

From the comparison the ratio of gelation between Example 8 and Comparative Example 5, it was found that the adhesive without adding trimethylolpropane of Comparative Example 5 (the adhesive being composed the linear polyurethane polymer only) had lower ratio of gelation because the three dimensional crosslinking structure is not formed, compared to the adhesive of Example 8 in which the three dimensional crosslinking structure is formed by adding trimethylolpropane. Then, it was found that the adhesive of Example 8 in which the three dimensional crosslinking structure is formed after curing had superior mechanical properties and adhesive properties, compared to the adhesive of Comparative Example 5 without having the three dimensional crosslinking structure, since the adhesive of Example 8 is a mixture in which a part of the multi-branched polyurethane resin is a polyurethane resin having the star-shaped branched structure.

In addition to adhesives of Comparative Examples 1 to 5, a hot melt adhesive composition was prepared by adding 5% of Irganox 565 to the sample 1 described in JP Patent No. 5759987 recited as a prior art document. It was found that the composition has poor applying competence and pot life (456% when the measurement was performed as same condition as described before) because the composition has low melt viscosity (380 mPa·s when measured at 135°C). When the tensile shear adhesive strength test was performed for the hot melt adhesive composition of the sample 12 described in the above Patent Document, it was confirmed that the adhesive fracture was occurred for the aluminum plate, and the sufficient strength was not obtained for the PMMA plate (1.5N/$mm^2$).

(6) Re-adhesion properties when adhesive after solidifying is re-melted [Tensile shear adhesive strength test]

Using an aluminum plate (25 × 100 mm and thickness 1mm) as a substrate, a test sample for tensile shear adhesive strength test was made according to JIS K6850. The melting temperature of the adhesive when making the test sample was as same as the measurement temperature of the viscosity properties (135°C).

After forming the test sample, the sample was left for 1 week or longer. After that, the test sample for measurement was attached to a full-auto rubber tensile testing machine (AGS-10kNG by Shimadzu corporation), the sample was pulled in a condition of a tensile speed 10 mm/min. The maximum load when the test sample ruptured was measured, and then the strength was calculated.

The remaining adhesive on the ruptured test sample in the above test was melted and adhered at the temperature as same as the measurement temperature of the viscosity properties (135°C). A test sample for tensile shear adhesive strength test was made again.

The sample was left for 1 week or longer. After that, the test sample for measurement was attached to a full-auto rubber tensile testing machine (AGS-10kNG by Shimadzu corporation), the sample was pulled in a condition of a tensile speed 10 mm/min. The maximum load when the test sample ruptured was measured, and then the strength was calculated.

[Test results]

The above tests were performed for the thermally reversible cross-linked hot-melt adhesive of Example 7.

Fig.1(a) is a photograph showing a breaking state of a test sample after the first test. Fig.1(b) is a photograph showing a breaking state of a test sample after the second test.

As a result of the above tests, the breaking forms of the test sample are both interface separating for the first test and the second test (when re-melted adhesive was used). The shearing stresses were both 0.9 N/$mm^2$ for the first test and the second test.

Since the shearing stresses for the first test and the second test were identical, the thermally reversible cross-linked hot-melt adhesive of the present invention was confirmed to be useable repeatedly.

INDUSTRIAL APPLICABILITY

In the thermally reversible cross-linked hot-melt adhesive of the present invention, the adhesive can be stored in air because the isocyanate group does not react with a moisture in air (water) . The polymer which can be melted by heating to a lower viscosity by the thermoreversible equivalent reaction and forms the three dimensional crosslinking structure after cooling and solidifying has high cohesive force and high adhesiveness, and therefore the hot melt adhesive can be used for various applications, in particular, suitable for hot melt adhesives for bookbinding.

## Claims

**1.** A thermally reversible cross-linked hot-melt adhesive, comprising:

a mixture of a polyurethane resin having furan rings at a plurality of terminals; and
a maleimide compound having maleimide groups at a plurality of terminals;
wherein the mixture of the polyurethane resin is a mixture of a multi-branched polyurethane resin having a star-shaped branched structure represented by the following formula 1 and a linear polyurethane resin represented by the following formula 2;

[Chemical formula 1]

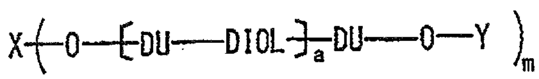

Formula 1

[Chemical formula 2]

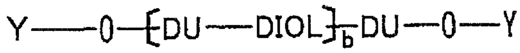

Formula 2

[in the above formula, X- represents a residue of a multi-branched compound having three or more branches having a hydroxy group at the terminal and has a structure in which m hydroxy groups of three or more hydroxy groups is substituted; m represents an integer of 3 or more, a and b are both integer of 1 to 10;

- DU represents a residue of a diurethane compound represented by the following formula 3:

[Chemical formula 3]

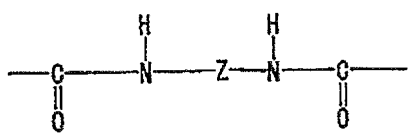

Formula 3

(in the above formula, Z represents a substituted or unsubstituted linear or branched alkylene group, a substituted or unsubstituted cycloalkylene group, a substituted or unsubstituted phenylene group, or a group obtained by connecting them);
- DIOL represents a residue of a diol compound having hydroxy groups at both terminals;
- Y represents a residue of a furan derivative represented by the following formula 4;

[Chemical formula 4]

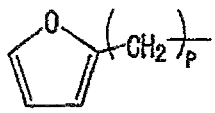

Formula 4

(in the above formula, p is an integer of 1 to 10)]; and
wherein as the residue of the diol compound, a residue of a crystalline polyester diol and a residue of a noncrystalline polyester diol or a polyether diol are both contained.

**2.** The thermally reversible cross-linked hot-melt adhesive according to claim 1, wherein the -DIOL- is a residue of a diol compound having hydroxy groups at both terminals and represented by the following formula 5;

[Chemical formula 5]

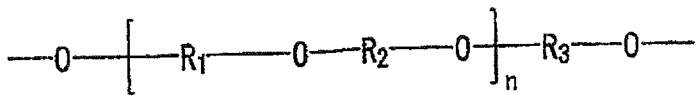

Formula 5

[in the above formula, $R_1$ and $R_3$ independently represent a substituted or unsubstituted linear or branched alkylene group having 2 to 12 carbon atoms, or a substituted or unsubstituted cycloalkylene group, or a group obtained by connecting the alkylene group and the cycloalkylene group; $R_2$ represents a substituted or unsubstituted linear or branched alkylene group having 2 to 12 carbon atoms, or a substituted or unsubstituted cycloalkylene group, a substituted or unsubstituted phenylene group, or a group obtained by connecting the alkylene group, the cycloalkylene group, and the phenylene group; or the following formula 6:

[Chemical formula 6]

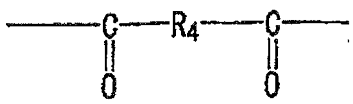

Formula 6

(in the above formula, $R_4$ represents a substituted or unsubstituted linear or branched alkylene group having 2 to 12 carbon atoms, or a substituted or unsubstituted cycloalkylene group, a substituted or unsubstituted phenylene group, or a group obtained by connecting them); and n represents an integer of 0 to 70].

**3.** The thermally reversible cross-linked hot-melt adhesive according to claim 2, wherein the residue of the diol compound having hydroxy groups at both terminals and represented by the formula 5 contains both:

at least one residue selected from the group consisting of:

a1) a residue of a crystalline polyester diol being composed of sebacic acid and hexanediol and having hydroxy groups at both terminals;
a2) a residue of a crystalline polyester diol being composed of adipic acid and hexanediol and having hydroxy groups at both terminals;
a3) a residue of a crystalline polyester diol being composed of dodecanedioic acid and ethylene glycol and having hydroxy groups at both terminals; and
a4) a residue of a crystalline polyester diol being composed of polycaprolactone and having hydroxy groups at both terminals; and

at least one residue selected from the group consisting of:

b1) a residue of a noncrystalline polyester diol being composed of adipic acid, hexanediol and neopentyl

glycol and having hydroxy groups at both terminals;
b2) a residue of a noncrystalline polyester diol being composed of adipic acid and propylene glycol and having hydroxy groups at both terminals;
b3) a residue of a noncrystalline polyester diol being composed of sebacic acid, isophthalic acid, hexanediol, and neopentyl glycol and having hydroxy groups at both terminals;
b4) a residue of a noncrystalline polyester diol being composed of phthalic acid and neopentyl glycol and having hydroxy groups at both terminals;
b5) a residue of a noncrystalline polyester diol being composed of sebacic acid and propylene glycol and having hydroxy groups at both terminals;
b6) a residue of polypropylene glycol; and
b7) a residue of polytetramethylene ether glycol.

**4.** The thermally reversible cross-linked hot-melt adhesive according to any one of claims 1 to 3, wherein the polyurethane resin further contains a residue of a low molecular weight diol compound selected from the group consisting of 2,4-diethyl-1,5-pentanediol and 1,2-propanediol as -DIOL- in the formula 1 and the formula 2.

**5.** The thermally reversible cross-linked hot-melt adhesive according to any one of Claims 1 to 4, wherein the maleimide compound is a bismaleimide.

**6.** The thermally reversible cross-linked hot-melt adhesive according to any one of claims 1 to 5, wherein -DU- in the formula 1 and the formula 2 is a residue of a compound selected from the group consisting of 4,4'-diphenylmethane diisocyanate, tolylene diisocyanate, pentamethylene diisocyanate, hexamethylene diisocyanate, and isophorone diisocyanate.

[Fig. 1]

breaking state of a test sample

a)

after the first test

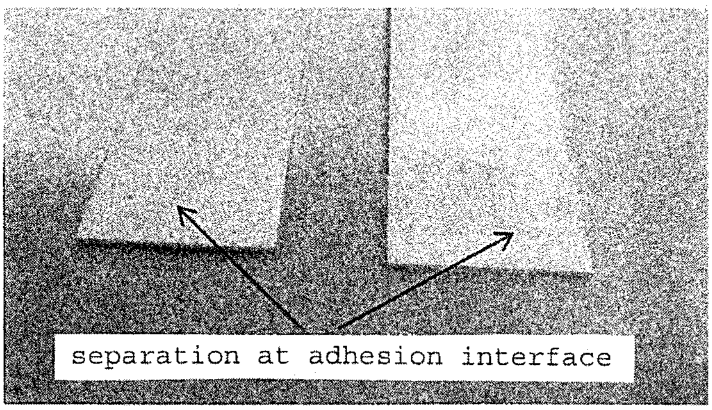


b)

after the second test

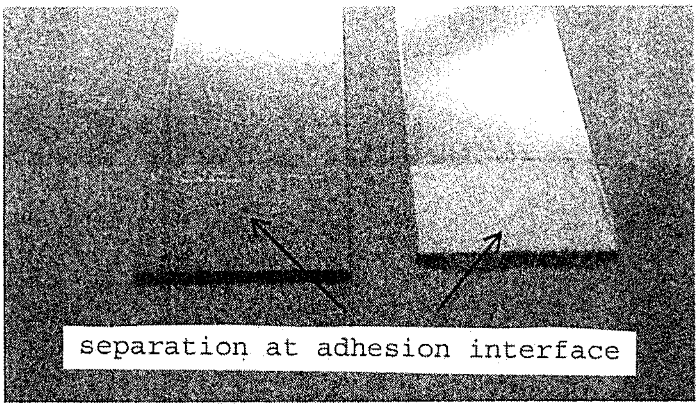

**INTERNATIONAL SEARCH REPORT**

International application No.
PCT/JP2018/023220

A. CLASSIFICATION OF SUBJECT MATTER
Int. Cl. C09J175/06(2006.01)i, C09J11/06(2006.01)i

According to International Patent Classification (IPC) or to both national classification and IPC

B. FIELDS SEARCHED

Minimum documentation searched (classification system followed by classification symbols)
Int. Cl. C09J1/00-201/10, C08K3/00-13/08, C08L1/00-101/14

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2012-530150 A (HENKEL CORP.) 29 November 2012, claims, examples & AU 2010260018 A1 & BR PI1010733 A2 & CN 102803416 A & EP 2440627 A2 & ES 2539184 T3 & KR 20120029421 A & RU 2555883 C2 & US 2012/082840 A1 | 1-6 |
| A | WO 2016/157614 A1 (HITACHI CHEMICAL CO., LTD.) 06 October 2016, claims, examples & CN 107406745 A & KR 20170131451 A & TW 201634647 A | 1-6 |
| A | JP 2003-183348 A (THE YOKOHAMA RUBBER CO., LTD.) 03 July 2003, claims, examples (Family: none) | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31.07.2018 | 14.08.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2018/023220

C (Continuation). DOCUMENTS CONSIDERED TO BE RELEVANT

| Category* | Citation of document, with indication, where appropriate, of the relevant passages | Relevant to claim No. |
|---|---|---|
| A | EP 3150648 A1 (HENKEL AG & CO. KGAA) 05 April 2017, examples, claims (Family: none) | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5759987 B